# EUROPEAN PATENT SPECIFICATION

(11) **EP 2 501 660 B1**
(45) Date of publication and mention of the grant of the patent: **07.06.2017**
(21) Application number: 09764342.3
(22) Date of filing: 19.11.2009
(51) Int. Cl.: C03C 17/36

(54) **BRONZE COLORED COATED ARTICLE WITH LOW-E COATING**
BRONZE GEFÄRBTER BESCHICHTETER ARTIKEL MIT LOW-E-BESCHICHTUNG
ARTICLE À REVÊTEMENT DE FAIBLE ÉMISSIVITÉ DE COULEUR BRONZE

(43) Date of publication of application: 26.09.2012
(73) Proprietor: Guardian Europe S.à.r.l., 8070 Bertrange (LU)
(72) Inventor: KNOLL, Hartmut, 06749 Bitterfeld - Wolfen (DE)
(74) Representative: Hess, Peter K. G.
(86) International application number: PCT/US2009/006178
(87) International publication number: WO 2011/062574

(56) References cited:
- EP-A1- 0 622 645
- EP-A2- 1 238 950
- EP-A2- 1 734 019
- WO-A1-01/66483
- US-A1- 2006 121 290

## Description

Certain embodiments of this invention relate to an insulating glass (IG) window unit or other type of window unit including a coating designed so as to permit the coated article to realize a bronze glass side reflective color. In particular, thicknesses of layers in the coating are designed so as to permit this bronze color to be realized. The coated article may or may not be heat treated in different example embodiments of this invention.

### BACKGROUND AND SUMMARY OF THE INVENTION

Coated articles and IG window units are known which use the following coating: glass/SiN/NiCr/Ag/NiCr/SiN. For example, see U.S. Patent Nos. 6,605,358, 6,730,352, 6,802,943, and 7,166,359. While these coated articles provide for good results in many applications, their color characteristics are sometimes not desired.

In particular, a fairly strong bronze color (e.g., glass side reflective color) is sometimes desired. Typical glass/SiN/NiCr/Ag/NiCr/SiN coated articles do not provide such bronze glass side coloration along with desired solar characteristics. For example, prior to heat treatment, Example 1 of U.S. Patent No. 6,605,358 having a stack of glass/SiN/NiCrN/Ag/NiCrN/SiN realized a glass side reflective a* color of -0.96 and a glass side reflective b* color of -7.92. These color values slightly change upon heat treatment (HT). Unfortunately, bronze glass side reflective color does not result.

In a similar manner, the glass/SiN/NiCrNx/Ag/NiCrNx/SiN coated articles of U.S. Patent No. 7,166,359 achieve blue glass side reflective color, but not bronze.

In view of the above, it will be appreciated that there is a need in the art for a coated article that is capable of realizing a combination of good solar control characteristics and desired bronze color (e.g., glass side reflective color). This is achieved by a coated article according to claim 1.

Document EP 1 238 950 discloses a heat-treatable low-E coated article comprising a double silver layer system with a layer of titanium oxide as first dielectric layer directly on the glass substrate.

WO 01/66483 likewise relates to a low-E coating comprising silicon nitride layers and contact layers based on NiCr sandwiching the infrared reflecting silver layer. Also this document suggests to use a layer of titanium oxide as first dielectric layer directly on the glass substrate.

EP 1734 019 discloses a coated article with a silver based IR-reflecting layer sandwiched by layers of zinc oxide and NiCr layers.

Document US 2006/0121290 discloses a coated article comprising an infrared reflecting silver layer being sandwiched by contact layers. The coating stack disclosed in this document is based on the use of zirconium silicon oxynitride as dielectric layer for improving the coated articles ability to block off UV-radiation.

Document EP 0 622 645 A1 relates to a thin film interference filter based on silver being sandwiched by nitrided NiCr layers. According to this document, the first dielectric layer directly on the glass substrate should be titanium oxide.

In certain example embodiments of this invention, it has surprisingly been found that a desirable bronze color can be realized, in combination with good solar characteristics, by adjusting thicknesses of layer(s) in the coating.

In certain example embodiments of this invention, a coating is provided that realizes a yellow glass side reflective b* coloration of from about +1 to +9, more preferably from about +1 to +7, more preferably from about +3 to +7.5, more preferably from about +3 to +6.5, and most preferably from about +4 to +6 (before and/or after optional heat treatment), in combination with red glass side reflective a* coloration of from about +1 to +7, more preferably from about +3 to +7, more preferably from about +3 to +6, more preferably from about +4 to +6, and most preferably from about +4 to +5.5 (before and/or after optional heat treatment). This results in bronze glass side reflective coloration of the monolithic coated article or insulating glass unit (IGU). In certain example embodiments, this bronze/copper glass side reflective coloration is coupled with a particular type of transmissive coloration. For example, in certain example embodiments, a coating is provided so that the monolithic coated article or IGU realizes blue transmissive b* coloration of from about -5 to -14, more preferably from about -7 to -11, and most preferably from about -8 to -10 (before and/or after optional heat treatment), in combination with green transmissive a* coloration of from about -1 to -7, more preferably from about - 2.5 to -6, and most preferably from about -3 to -4.5 (before and/or after optional heat treatment). By providing a coating that can achieve glass side reflective bronze coloration along with acceptable solar characteristics and visible coloration, there is no need for a bronze colored front glass substrate in certain example embodiments of this invention for IG units, and other types of front glass substrates can be used such as clear or slightly green colored glass substrates if desired.

Good solar control characteristics (e.g., fairly low sheet resistance and/or emissivity) can also be achieved. The combination of these desirable features may be realized by thinning the lower dielectric layer (e.g., compared to its thickness in U.S. Patent Nos. 7,166,359 and 6,605,358) in certain example embodiments of this invention, while possibly providing a thinner upper dielectric layer in certain example instances (e.g., compared to its thickness in preferred embodiments in U.S. Patent Nos. 7,166,359 and 6,605,358). The dielectric layers may be of or include silicon nitride in certain example embodiments of this invention. The IR reflecting layer may be of or include silver certain example embodiments of this invention. The contact layers, between the IR reflecting layer and the dielectric layers, may be of or including Ni and/or Cr which may be nitrided in certain example embodiments. Optionally, a protective overcoat of or including zirconium oxide may be provided over the upper dielectric layer in certain example embodiments. Alternatively, the protective overcoat may be of or including aluminum oxide, aluminum nitride, and/or aluminum oxynitride.

Coated articles according to certain example embodiments of this invention may be used in the context of insulating glass (IG) window units, monolithic windows, or in other suitable applications in different instances.

In certain example non-limiting embodiments of this invention, a coated article is provided having a stack comprising or consisting essentially of glass/SiN/NiCr/Ag/NiCr/SiN, where the bottom silicon nitride inclusive layer has a thickness of from 10 to 21 nm. The top silicon nitride inclusive layer may have a thickness of from about 26-40 nm, more preferably from about 29-39 nm, and more preferably from about 30-38 nm. These thickness ranges used in combination allow for desirable significantly bronze coloration to be realized in certain example embodiments of this invention. The NiCr layers may or may not be nitrided in different embodiments, although nitriding is preferred in certain example embodiments.

In certain example embodiments of this invention, there is provided a coated article including a multi-layer coating supported by a glass substrate, the coating comprising at least the following layers from the glass substrate outwardly: a first layer comprising silicon nitride; a first contact layer comprising Ni and/or Cr; an infrared (IR) reflecting layer comprising silver located over and directly contacting the first contact layer comprising Ni and/or Cr; a second contact layer comprising Ni and/or Cr located over and directly contacting the IR reflecting layer; a second layer comprising silicon nitride on the glass substrate located over at least the IR reflecting layer, the contact layers and the first layer comprising silicon nitride; and wherein the first layer comprising silicon nitride is from about 10 to 29 nm thick, and wherein the coated article has bronze glass side reflective color and has the following glass side reflective color values: a* from +1 to +7, and b* from +1 to +9.

In other example embodiments of this invention, there is provided a coated article including a multi-layer coating supported by a glass substrate, the coating comprising at least the following layers from the glass substrate outwardly:
a first layer comprising silicon nitride; a first contact layer; an infrared (IR) reflecting layer located over and directly contacting the first contact layer; a second contact layer located over and directly contacting the IR reflecting layer; a dielectric layer; wherein the first layer comprising silicon nitride is from about 13-27 nm thick, and wherein the coated article has bronze glass side reflective coloration

### BRIEF DESCRIPTION OF THE DRAWINGS

FIGURE 1 is a cross sectional view of a coating on a substrate according to an example embodiment of this invention.
FIGURE 2 is a cross sectional view of an insulating glass (IG) window unit (or IGU) including the coating of Fig. 1 according to an example embodiment of this invention.

### DETAILED DESCRIPTION OF CERTAIN EXAMPLE EMBODIMENTS OF THE INVENTION

Certain embodiments of this invention relate to a coated article including a coating supported by a substrate. The coating may be provided either directly on and in contact with the underlying substrate, or alternatively may be provided on the substrate with other layer(s) therebetween. In certain example instances, coated articles according to certain embodiments of this invention may be used in a window unit (e.g., IG window unit, or any other suitable type of window unit), and realizes desirable visible transmission (Tᵥᵢₛ), visible glass side reflectance (RgY), transmissive color (a* and/or b*), and/or glass side reflective color (a* and/or b*). In certain example embodiments of this invention, glass side reflective bronze color with respect to a* and b* is particularly important. In certain example embodiments, a coating is provided that realizes a yellow glass side reflective b* coloration of from about +1 to +9, more preferably from about +1 to +7, more preferably from about +3 to +7.5, more preferably from about +3 to +6.5, and most preferably from about +4 to +6 (before and/or after optional heat treatment), in combination with red glass side reflective a* coloration of from about +1 to +7, more preferably from about +3 to +7, more preferably from about +3 to +6, more preferably from about +4 to +6, and most preferably from about +4 to +5.5 (before and/or after optional heat treatment). This yellow and red combination results in bronze glass side reflective coloration of the monolithic coated article or insulating glass (IG) window unit. In certain example embodiments, this bronze/copper glass side reflective coloration is coupled with a particular type of transmissive coloration. For example, in certain example embodiments, a coating is provided so that the monolithic coated article or IGU realizes blue transmissive b* coloration of from about -5 to -14, more preferably from about -7 to -11, and most preferably from about -8 to -10 (before and/or after optional heat treatment), in combination with green transmissive a* coloration of from about -1 to -7, more preferably from about -2.5 to -6, and most preferably from about -3 to -4.5 (before and/or after optional heat treatment). Thus, the coated article (e.g., monolithic window unit or IG window unit) appears bronze in color from the outside of the building (glass side reflective coloration), but does not appear bronze from the perspective of a person or viewer looking at the window from inside of the building (transmissive color). These transmissive colors permits overcast skies outside to appear blue or bluish from inside the building which is desirable in certain example instances.

By providing a coating that can achieve glass side reflective bronze coloration along with acceptable solar characteristics, there is no need for a bronze colored front glass substrate in certain example embodiments of this invention, and other types of front glass substrates 1 can be used such as clear or slightly green colored glass substrates if desired.

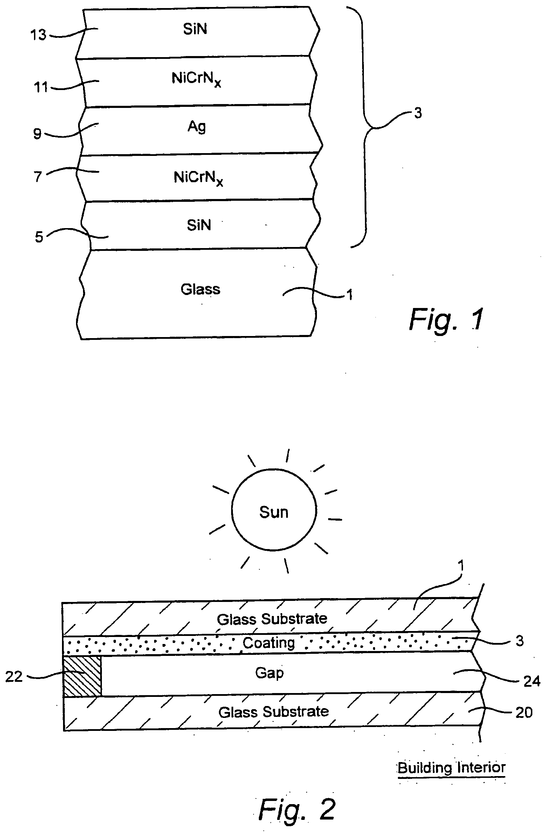

Figure 1 illustrates a coating 3 according to an example embodiment of this invention, supported by glass substrate 1. Substrate 1 is preferably glass such as soda-lime-silica glass, borosilicate glass, or the like. As for glass color, substrate 1 may be clear, green, bronze, blue-green, grey, or any other suitable color in different embodiments of this invention, and is preferably from about 1.0 to 10.0 mm thick, more preferably from about 4.0 mm to 10 mm thick (e.g., 6 to 8 mm thick).

The coating 3 shown in Fig. 1 includes, from the glass substrate 1 outwardly, silicon nitride inclusive layer 5, bottom contact layer 7, infrared (IR) reflecting layer 9, top contact layer 11, and top dielectric layer 13. The "contact" layers 7 and 11 each contact IR reflecting layer 9. Infrared (IR) reflecting layer 9 is preferably metallic or mostly metallic, and conductive, and may be made of or include silver (Ag), gold, alloys thereof, or any other suitable IR reflecting material. However, metallic or substantially metallic Ag is the material of choice for the IR reflecting layer 9 in certain example non-limiting embodiments of this invention. The IR reflecting layer allows coating 3 to have good solar control characteristics such as fairly low sheet resistance and/or emissivity. For example, a g-value (DIN EN 410) of about 0.29 plus/minus 0.03 can be achieved, and an emissivity of about 0.03 plus/minus 0.01 can be achieved. Moreover, in certain example embodiments, a combination of a reflection > 20% and transmission >35% can be achieved for monolithic windows and/or IG units. Only one IR reflecting layer of or based on Ag, Au or the like is provided in the coating in certain example embodiments. While layers 5 and 13 are preferably of or include silicon nitride and/or silicon oxynitride in certain example embodiments, other dielectric materials may instead be used in certain alternative embodiments.

One or both of contact layers 7 and 11 may be of or include Ni and/or Cr in certain example embodiments of this invention. In certain example embodiments, one or both of contact layers 7, 11 is of or includes nickel (Ni), chromium (Cr), or an alloy of nickel-chrome (NiCr) in different embodiments of this invention. The Ni, Cr, or NiCr may be nitrided (e.g., NiCrNₓ) in certain example embodiments of this invention, which is good for improving optical stability of the coated upon heat treatment such as thermal tempering. Heat treatment such as tempering is optional in certain embodiments. In certain example embodiments, it will thus be appreciated that one or both of contact layers 7 and 11 may comprise nickel oxide, chromium/chrome oxide, a nickel alloy oxide such as nickel chrome oxide (NiCrOₓ), a nickel alloy nitride such as nickel chrome nitride (NiCrNₓ), or a nickel alloy oxynitride such as nickel chrome oxynitride (NiCrOₓN_{y}) in certain example embodiments of this invention. When one or both of contact layers 7 and 11 comprise NiCr or NiCrNₓ in certain embodiments, the Ni and Cr may be provided in different amounts, such as in the form of nichrome by weight about 80-90% Ni and 10-20% Cr. In other embodiments, sputtering targets used in sputtering layer(s) 7 and/or 11 may be 50/50 Ni/Cr, 60/40 Ni/Cr, 70/30 Ni/Cr, or any other suitable weight ratio. An exemplary sputtering target for depositing these layers includes not only SS-316 which consists essentially of 10% Ni and 90% other ingredients, mainly Fe and Cr, but potentially Haynes 214 alloy as well (e.g., see U.S. Patent No. 5,688,585). Optionally, one or both of contact layer(s) 7 and/or 11 may be oxidation and/or nitrogen graded in different embodiments of this invention so as to be more metallic closer to the IR reflecting layer and less metallic further from the IR reflecting layer 9. The contact layers 7 and 11 may or may not be continuous in different embodiments of this invention, depending upon their respective thicknesses.

One or both of dielectric layers 5 and 13 may be of or include silicon nitride (e.g., stoichiometric Si₃N₄ or any other suitable non-stoichiometric form of silicon nitride) in certain example embodiments of this invention. The silicon nitride may be doped with Al, boron, stainless steel, or the like in certain example embodiments of this invention. Layers 5 and/or 13 may include small amounts of oxygen in certain instances. In certain example embodiments, one or both of dielectric layers 5, 13 may be of or include silicon oxynitride, silicon oxide, or any other suitable dielectric material. Optionally, other layers may be provide on substrate 1 over dielectric layer 13 in certain embodiments of this invention, or under layer 5, or otherwise located in certain example instances. In certain example embodiments, dielectric layer 5 may comprise a silicon-rich (Si-rich) form of silicon nitride (i.e., SiₓN_{y} where x/y may be from about 0.76 to 2.0, more preferably from about 0.80 to 1.5, and most preferably from about 0.80 to 1.3). Making the silicon nitride layer 5 non-stoichiometric by increasing its Si content causes the layer's index of refraction "n" and extinction coefficient "k" to increase (e.g., in the range of 350-550 nm). In particular, in certain example embodiments of this invention, increasing the Si content in silicon nitride layer 5 (i.e., making it Si-rich) causes the layer to have an index of refraction "n" (at 550 nm) of from 2.15 to 2.6, more preferably from 2.2 to 2.5, and most preferably from 2.35 to 2.45 (compare to an index of refraction "n" of 2.05 for stoichiometric Si₃N₄). As stated above, making layer 5 Si-rich causes both "n" and "k" to rise; however care may be taken to make sure that "k" does not rise too much. In particular, if "k" becomes too high (e.g., greater than 0.07), an undesirable brown color may be realized in certain instances. Thus, it is sometimes desirable not to make the silicon nitride layer 5 too Si-rich. In certain embodiments of this invention, the Si content in the silicon nitride based layer 5 is raised (to make it non-stoichiometric) to an extent such that the layer's extinction coefficient "k" (at 550 nm) is from 0 to 0.07, more preferably from 0 to 0.06, even more preferably from 0 to 0.05, and most preferably from 0.0001 to 0.05. Optionally, a layer of or including zirconium oxide (e.g., ZrOₓ) may be provided over the top silicon nitride based dielectric layer 13 in certain example embodiments of this invention. Thus, the silicon nitride layer 13 may be the uppermost layer of the coating in certain embodiments, whereas the zirconium oxide based layer (not shown) may be the uppermost layer of the coating in other example embodiments. Other layers may also be provided.

In certain example embodiments of this invention, coating 3 may include at least the below listed layers, from the glass substrate outwardly (example thicknesses listed in units of nm):

**Table 1: Example Coating**

| Layer | Preferred Range (nm) | More Preferred (nm) | Most Preferred (nm) |
|---|---|---|---|
| Glass Substrate (1-10 mm) | | | |
| SiN (5) | 10-29 nm | 16-29 nm | 18-28 nm |
| NiCr or NiCrN_{X} (7) | 1-10 nm | 1-8 nm | 1.5-4 nm |
| Ag (9) | 10-16 nm | 11-15 nm | 12-14 nm |
| NiCr or NiCrNₓ (11) | 1-10 nm | 1-8 nm | 2-6 nm |
| SiN (13) | 26-40 nm | 29-39 nm | 30-38 nm |
| ZrO_{2 (not shown)} | 1-6 nm | 3-5 nm | 3.5-4.5 nm |

Example thicknesses for the respective layers, from the glass moving outwardly, are 20 nm, 2 nm, 13 nm, 4 nm, 32nm, and 4 nm, respectively. Thus, the lower silicon nitride based layer 5 is substantially thinner than the upper silicon nitride based layer 13 (e.g., by at least about 5 nm, more preferably by at least about 8 nm, and most preferably by at least about 10 nm). Moreover, the lower NiCr or NiCrNₓ based layer 7 is substantially thinner than is the upper NiCr or NiCrNₓ based layer 11 (e.g., by at least about 0.5 nm, more preferably by at least about 1.0 or 1.5 nm). The combination of the desirable features (e.g., glass side reflective bronze color, and non-bronze color when viewed from inside the building on which the window is provided) may be realized by the above thicknesses of the respective layers. For instance, thinning the lower dielectric layer 5 (e.g., compared to its thickness in U.S. Patent Nos. 7,166,359 and 6,605,358) in certain example embodiments of this invention, while also providing a thinner upper dielectric layer 13 in certain example instances (e.g., compared to its thickness in preferred embodiments in U.S. Patent Nos. 7,166,359 and 6,605,358). Making the top silicon nitride based layer 13 thicker than the bottom silicon nitride based layer 5 is significant in this respect, and allows the desired features to be achieved.

In certain example embodiments, it is possible to achieve bronze glass side reflective color with a higher thickness for the first silicon nitride based layer 5. In such example embodiments, layer 5 maybe from about 10-38 nm thick, more preferably from about 16-35 or 18-28 nm thick.

The decreased thickness of the bottom silicon nitride inclusive layer 5 in the above embodiments has been found to be particularly useful in achieve desired bronze/copper glass side reflective coloration of the coated article, when the other layers are of thicknesses used to obtain desired solar control characteristics. In certain example embodiments of this invention, the ratio of the thickness of layer (5)/layer (13) is from about 0.45 to 0.90, more preferably from about 0.5 to 0.8, and most preferably from about 0.55 to 0.68. In combination, the utilized thicknesses above permit the desired bronze glass side reflective coloration and good solar control and optical characteristics to be simultaneously realized by the coated article before and/or after heat treatment.

In an example non-limiting embodiment, base silicon nitride layer 5 is about 20 nm thick, bottom NiCr inclusive contact layer 7 is about 2 nm thick, Ag based IR reflecting layer 9 is about 13 nm thick, upper NiCr inclusive contact layer 11 is about 4 nm thick, upper silicon nitride layer 13 about 32 nm thick, and optional zirconium oxide overcoat about 4 nm thick. These are physical thicknesses.

Fig. 2 illustrates part of an IG window unit including the coating 3 of Fig. 1. As shown in Fig. 2, the coated substrate 1 is preferably coupled (after HT in certain instances) to another substrate (glass or plastic) 20 via at least one spacer and/or seal 22 so as to form an IG window unit. The space or gap 24 between the opposing substrates may or may not be evacuated to a pressure below atmospheric in different embodiments of this invention. Moreover, the space or gap 24 between the substrates may or may not be filled with a gas (e.g., Ar) in different embodiments of this invention.

Heat treatment (e.g., thermal tempering) is optional. In certain example embodiments, the coated article may be heat treated which often necessitates heating the coated substrate to temperatures of from 500° C to 800° C (more preferably from about 580 to 750 degrees C) for a sufficient period of time, e.g., 1 to 15 minutes, to attain the desired result, e.g., thermal tempering, bending, and/or heat strengthening).

In certain example embodiments of this invention, coated articles herein have the following optical characteristics in monolithic form (i.e., not in IG Unit form), and measured with regard to Ill. C, 2 degree observer. Note that the a* and b* and other characteristics below are for before and/or after heat treatment of the monolithic coated article.

**Table 2: Example Characteristics (Monolithic) (Before/After HT)**

| Characteristic | General | More Preferred | Most Preferred |
|---|---|---|---|
| Tᵥᵢₛ (or TY) (transmissive): | 35-49% | 38-47% | 40-45% |
| a*ₜ: | -1.0 to -7.0 | -2.5 to -6 | -3.0 to -4.5 |
| b*ₜ: | -5.0 to -14.0 | -7 to -11 | -8 to -10 |
| R_{g}Y (glass side): | 20 to 28% | 21 to 27% | 22 to 26% |
| a*_{g}: | +1 to +7 | +3 to +6 | +4 to +5.5 |
| b*_{g}: | +1 to +9 | +3 to +7.5 | +4 to +6 |
| R_{f}Y (film side): | 9 to 16% | 10.5 to 15% | 11-14% |
| a*_{f}: | +6 to +19 | +10 to +16 | +12 to +15 |
| b*_{f}: | +18 to +39 | +20 to +35 | +22 to +33 |
| Sheet Resistance pre-HT: | <= 5 ohms/sq. | <= 4 or 3.5 ohms/sq. | <= 3 Ω/sq. |
| Sheet Resistance post-HT | <= 4 ohms/sq. | <= 3.5 ohms/sq. | <= 3 Ω/sq. |

It can be seen from the yellow glass side reflective b* coloration, in combination with the red glass side reflective a* coloration, that desirable bronze glass side reflective coloration is achieved, in combination with desirable transmissive optical characteristics (e.g., green transmissive a* and blue transmissive b*) and solar characteristics. This was surprisingly achieved as discussed above by adjusting the thicknesses of the layer(s) of the coated article according to certain example embodiments of this invention.

In certain example embodiments of this invention, the monolithic coated article may be used in an IG window unit as shown in Fig. 2 of the instant application for example. In such IG embodiments, the IG window unit may have a visible transmission of from about 35 to 50%, more preferably from about 36 to 45%, and most preferably from about 38 to 43%. The same good bronze glass side reflective coloration, and other a* and b* values mentioned above, are realized in an IG unit.

### EXAMPLES

The following Example coated article was made in accordance with certain embodiments of this invention. For the Example, a coating as shown in Fig. 1 was sputter-deposited onto a 6 mm thick clear glass substrate, and had the following layer stack from the glass substrate outwardly (the silicon nitride layers were doped with about 2% Al):

| Layer | Thickness (nm) |
|---|---|
| Glass Substrate (6 mm) | |
| SiN (5) | 20 nm |
| NiCrN (7) | 2 nm |
| Ag (9) | 13 nm |
| NiCrN (11) | 4 nm |
| SiN (13) | 32 nm |
| ZrO₂ | 4 nm |

As coated, without any tempering and measured monolithically, the coated article of this Example had the following characteristics:

**Example 1 (monolithic; pre-HT)**

| Characteristic | Example 1 |
|---|---|
| Tᵥᵢₛ (or TY) (transmissive): | 43.1 % |
| a*ₜ: | -3.9 |
| b*ₜ: | -9.2 |
| R_{g}Y (glass side): | 23.4 % |
| a*_{g}: | 4.7 |
| b*_{g}: | 5.6 |
| R_{f}Y (film side): | 13.4% |
| a*_{f}: | 13.2 |
| b*_{f}: | 25.6 |

The coated article of the Example was then heat treated (HT) for thermal tempering. Following this heat treatment, the coated article had the following characteristics:

**Example 1 (monolithic; post-HT)**

| Characteristic | Example 1 |
|---|---|
| Tᵥᵢₛ (or TY) (transmissive): | 43.7 % |
| a*ₜ: | -3.6 |
| b*ₜ: | -9.1 |
| RgY (glass side): | 24.8 % |
| a*_{g}: | 4.6 |
| b*_{g}: | 5.7 |
| R_{f}Y (film side): | 11.1 % |
| a*_{f}: | 14.2 |
| b*_{f}: | 29.3 |
| Sheet Resistance (Rₛ): | 2.8 ohms/sq. |
| Emissivity (normal): | 3.2% |

The coated article of the example was then put in an IG unit as shown in Fig. 2, so that the low-E coating was on surface #2 of the IG window unit. The other glass substrate of the IGU was about 4 mm thick and clear in color, and the gap between the glass substrates was filled with Ar gas. Below, glass side reflectance indicates outside reflectance.

**Example 1 (IG Unit; post-HT)**

| Characteristic | Example 1 |
|---|---|
| Tᵥᵢₛ (or TY) (transmissive): | 40.0 % |
| a*ₜ: | -3.6 |
| b*ₜ: | -8.3 |
| RgY (glass side): | 26.4 % |
| a*_{g}: | 4.1 |
| b*_{g}: | 4.2 |
| R_{f}Y (film/inside): | 17.5 % |
| a*_{f}: | 8.8 |
| b*_{f}: | 14.8 |
| g-value (%) [EU]: | 29.0 |
| SHGC (%) [US]: | 26.7% |

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims. For example and without limitation, other layer(s) may be added to the coating (e.g., between layer 5 and the glass substrate, or between any of the other layers of the coating, or even over the top dielectric layer shown in the figures).

## Claims

1. A coated article including a multi-layer coating (3) supported by a glass substrate (1), the coating consisting of the following layers, and optionally an overcoat, from the glass substrate outwardly:
a first layer (5) comprising silicon nitride;
a first contact layer (7) comprising NiCr;
an infrared (IR) reflecting layer (9) comprising silver located over and directly contacting the first contact layer (7) comprising NiCr;
a second contact layer (11) comprising NiCr located over and directly contacting the IR reflecting layer (9);
a second layer comprising silicon nitride (13) on the glass substrate (1) located over at least the IR reflecting layer (9), the contact layers (7, 11) and the first layer comprising silicon nitride(5); and
wherein the first layer (5) comprising silicon nitride is from 10 to 21 nm thick, and
wherein the second layer comprising silicon nitride is thicker than the first layer comprising silicon nitride, and a ratio of the thickness of the first layer comprising silicon nitride to the thickness of the second layer comprising silicon nitride is from 0.45 to 0.90 and
wherein the coated article has bronze glass side reflective color and has the following glass side reflective color values: a* from +1 to +7 and b* from +1 to +9.

2. The coated article of claim 1, wherein the second layer comprising silicon nitride is from 29-39 nm thick, the coated article has a sheet resistance of no greater than 5 ohms/square, and a visible transmission of from 35- 49%, preferably wherein the coated article has a sheet resistance of no greater than 3 ohms/square, and a visible transmission of from 38-47%.

3. The coated article of claim 1, wherein an overcoat layer comprising one or more of: zirconium oxide, aluminum oxide, aluminum nitride, or aluminum oxynitride, is provided on the glass substrate over the second layer comprising silicon nitride.

4. The coated article of claim 1, wherein the ratio of the thickness of the first layer comprising silicon nitride to the thickness of the second layer comprising silicon nitride is from 0.5 to 0.8, more preferably from 0.55 to 0.68.

5. The coated article of claim 1, wherein the glass substrate is not bronze in color, and may be substantially clear or green in color.

6. An IG window unit comprising the coated article of claim 1 coupled to another glass substrate (20).

## Patentansprüche

1. Ein beschichteter Gegenstand umfassend eine Mehrschichtbeschichtung (3), welche von einem Glassubstrat (1) gestützt wird, wobei die Beschichtung von dem Glassubstrat aus nach außen hin aus den folgenden Schichten und optional einem Überzug besteht:
eine erste Schicht (5), aufweisend Siliziumnitrid;
eine erste Kontaktschicht (7), aufweisend NiCr;
eine Infrarot (IR) reflektierende Schicht (9), aufweisend Silber, welche über der ersten Kontaktschicht (7), aufweisend NiCr, angeordnet ist und diese direkt kontaktiert;
eine zweite Kontaktschicht (11), aufweisend NiCr, welche über der IR-reflektierenden Schicht (9) angeordnet ist und diese direkt kontaktiert;
eine zweite Schicht, aufweisend Siliziumnitrid (13) auf dem Glassubstrat (1), welche über zumindest der IR-reflektierenden Schicht (9), den Kontaktschichten (7, 11) und der ersten Schicht, aufweisend Siliziumnitrid (5), angeordnet ist; und
wobei die erste Schicht (5), aufweisend Siliziumnitrid zwischen 10 und 21 Nanometer dick ist; und
wobei die zweite Schicht, aufweisend Siliziumnitrid, dicker ist als die erste Schicht, aufweisend Siliziumnitrid und wobei ein Verhältnis der Dicke der ersten Schicht, aufweisend Siliziumnitrid, zu der Dicke der zweiten Schicht, aufweisend Siliziumnitrid zwischen 0,45 und 0,9 ist und
wobei der beschichtete Gegenstand eine glasseitig reflektierende Bronzefarbe aufweist und die folgenden glasseitigen Reflexionsfarbwerte aufweist: a* von +1 bis +7 und b* von +1 bis +9.

2. Der beschichtete Gegenstand nach Anspruch 1, wobei die zweite Schicht, aufweisend Siliziumnitrid, zwischen 29 - 39 nm dick ist, wobei der beschichtete Gegenstand einen Flächenwiderstand von nicht mehr als 5 Ohm/Quadrat und eine sichtbare Transmission von 35 - 49% aufweist, vorzugsweise wobei der beschichtete Gegenstand einen Flächenwiderstand von nicht mehr als 3 Ohm/Quadrat und eine sichtbare Transmission von 38 - 47% aufweist.

3. Der beschichtete Gegenstand nach Anspruch 1, wobei eine Überzugsschicht auf dem Glassubstrat über der zweiten Schicht, aufweisend Siliziumnitrid, vorgesehen ist, wobei die Überzugsschicht eines oder mehrere von Zirkonium Oxid, Aluminiumoxid, Aluminiumnitrid oder Aluminiumoxynitrid aufweist.

4. Der beschichtete Gegenstand nach Anspruch 1, wobei das Verhältnis der Dicke der ersten Schicht, aufweisend Siliziumnitrid, zu der Dicke der zweiten Schicht, aufweisend Siliziumnitrid, zwischen 0,5 und 0,8 mehr bevorzugt von 0,55 und 0,68 ist.

5. Der beschichtete Gegenstand nach Anspruch 1, wobei das Glassubstrat nicht bronzefarben ist und im Wesentlichen klar oder grün sein kann.

6. Eine IG-Fenstereinheit aufweisend den beschichteten Gegenstand nach Anspruch 1, welcher mit einem anderen Glassubstrat (20) verbunden ist.

## Revendications

1. Article revêtu, comprenant un revêtement multicouche (3) supporté par un substrat de verre (1), le revêtement consistant en les couches suivantes, et en option un sur-revêtement, vers l'extérieur à partir du substrat de verre :
une première couche (5) comprenant du nitrure de silicium ;
une première couche de contact (7) comprenant du NiCr ;
une couche (9) réfléchissant les infrarouges (IR), comprenant de l'argent, située par-dessus la première couche de contact (7) comprenant du NiCr et en contact direct avec celle-ci ;
une deuxième couche de contact (11) comprenant du NiCr, située par-dessus la couche (9) réfléchissant les IR, et en contact direct avec celle-ci ;
une deuxième couche comprenant du nitrure de silicium (13) sur le substrat de verre (1), située par-dessus au moins la couche (9) réfléchissant les IR, les couches de contact (7, 11) et la première couche comprenant du nitrure de silicium (5) ; et
dans lequel la première couche (5) comprenant du nitrure de silicium a une épaisseur de 10 à 21 nm, et
dans lequel la deuxième couche comprenant du nitrure de silicium est plus épaisse que la première couche comprenant du nitrure de silicium, et un rapport entre l'épaisseur de la première couche comprenant du nitrure de silicium et l'épaisseur de la deuxième couche comprenant du nitrure de silicium étant de 0,45 à 0,90, et
dans lequel l'article revêtu présente une couleur bronze en réflexion côté verre, et présente les valeurs chromatiques suivantes en réflexion côté verre : a* de +1 à +7, et b* de +1 à +9.

2. Article revêtu selon la revendication 1, dans lequel la deuxième couche comprenant du nitrure de silicium a une épaisseur de 29 à 39 nm, l'article revêtu a une résistance de couche non supérieure à 5 ohms/carré, et un facteur de transmission dans le visible de 35 à 49 %, de préférence dans lequel l'article revêtu a une résistance de couche non supérieure à 3 ohms/carré et un facteur de transmission dans le visible de 38 à 47 %.

3. Article revêtu selon la revendication 1, dans lequel une couche de sur-revêtement comprenant un ou plusieurs de l'oxyde de zirconium, de l'oxyde d'aluminium, du nitrure d'aluminium ou de l'oxyhydrure d'aluminium est disposée sur le substrat de verre par-dessus la deuxième couche comprenant du nitrure de silicium.

4. Article revêtu selon la revendication 1, dans lequel le rapport entre l'épaisseur de la première couche comprenant du nitrure de silicium et l'épaisseur de la deuxième couche comprenant du nitrure de silicium est de 0,5 à 0,8, plus particulièrement de 0,55 à 0,68.

5. Article revêtu selon la revendication 1, dans lequel le substrat de verre n'est pas de couleur bronze, mais peut avoir une couleur sensiblement claire ou verte.

6. Vitrage isolant IG comprenant l'article revêtu de la revendication 1, couplé à un autre substrat de verre (20).
